# EUROPÄISCHE PATENTSCHRIFT

(11) **EP 1 167 133 B1**
(45) Veröffentlichungstag und Bekanntmachung des Hinweises auf die Patenterteilung: **22.02.2006**
(21) Anmeldenummer: 01115805.2
(22) Anmeldetag: 28.06.2001
(51) Int. Cl.: B60R 22/24

(54) **Umlenkeinrichtung für einen Sicherheitsgurt**
Guide loop for a seat belt
Ancrage de renvoi pour une ceinture de sécurité

(30) Priorität: 28.06.2000 DE 10032803
(43) Veröffentlichungstag der Anmeldung: 02.01.2002
(73) Patentinhaber: Janz, Norbert, 14612 Falkensee (DE)
(72) Erfinder: Janz, Norbert, 14612 Falkensee (DE)
(74) Vertreter: Albrecht, Rainer Harald

(56) Entgegenhaltungen:
- WO-A-98/16361
- WO-A-99/32565
- DE-A- 3 306 095
- DE-A- 10 032 803
- DE-A- 19 610 054
- DE-U- 29 915 058
- GB-A- 1 330 637
- GB-A- 2 255 897

## Beschreibung

Die Erfindung betrifft eine Umlenkeinrichtung für einen Sicherheitsgurt mit einem an einer Trägereinheit einer Fahrzeugkarosserie befestigbaren Umlenkelement, das eine langgestreckte Gurtöse mit einem eine Lauffläche für den Sicherheitsgurt bildenden Gurtlaufabschnitt aufweist,
wobei das Umlenkelement aus einem Stahlblechformteil besteht, an das der Gurtlaufabschnitt angeformt ist, und
wobei der Gurtlaufabschnitt mit einer den Reibungswiderstand reduzierenden Gleitbeschichtung versehen ist.

Eine Umlenkeinrichtung des beschriebenen Aufbaus wird für sogenannte Dreipunkt-Sicherheitsgurte in Personenkraftfahrzeugen eingesetzt und ist dort in der Regel im Schulter/Kopfbereich der zu sichernden Person, z. B. an der B-Säule des Fahrzeugs befestigt. Bei einem Aufprall des Fahrzeuges auf ein Hindernis ist die Umlenkeinrichtung erheblichen Belastungen ausgesetzt, die aus den negativen Beschleunigungen resultieren, die der Sicherheitsgurt auf die zu sichernde Person ausüben muss, um diese zu halten. Gurtstraffer und Gurtkraftbegrenzer beeinflussen den Lastverlauf in der Umlenkeinrichtung. Die Gleitbeschichtung ermöglicht aufgrund des reduzierten Betätigungswiderstandes eine bequeme Bedienung des Sicherheitsgurtes. Ferner soll die Gleitbeschichtung dank reduzierter Reibung zwischen Sicherheitsgurt und Gurtlauffläche eine unzulässige Erwärmung des Sicherheitsgurtes verhindern, wenn in einem Crashfall hohe Relativgeschwindigkeiten zwischen dem Sicherheitsgurt und der Gurtlauffläche auftreten. Eine unzulässige Erwärmung im Crashfall brächte nämlich nicht nur das Risiko einer Beschädigung des Sicherheitsgurtes, beispielsweise durch Aufschmelzungen mit sich, die wiederum das Laufverhalten des Sicherheitsgurtes über die Gurtlauffläche beeinträchtigen könnte, unter Umständen ginge von ihr auch eine Verletzungsgefahr für die angegurtete Person aus.

Es ist bekannt, das Umlenkelement mit einer metallischen Beschichtung zu versehen, beispielsweise zu verchromen. Dies führt zwar zu einer Beschichtung mit guter Abriebfestigkeit und langen Standzeiten, jedoch nicht zu zufriedenstellenden Reibbeiwerten.

Ferner sind Umlenkelemente mit einem Metallkern und einem dickwandigen Kunststoffmantel bekannt. Das Kunststoffteil bildet die Gurtlauffläche. Die Reibbeiwerte der Kunststoffummantelung sind schlechter als von Chromschichten. Ferner neigen die verwendeten Kunststoffe aufgrund Ihrer geringen Temperaturbeständigkeit bei einer starken Erwärmung, wie sie im Crashfall durch die hohen Relativgeschwindigkeiten auftreten kann, zum Aufweichen bzw. lokalen Aufschmelzen. Dies wirkt sich in der oben für den Sicherheitsgurt beschriebenen Weise nachteilig auf das Laufverhalten des Sicherheitsgurtes im Crashfall aus. Hinzu kommt das Problem, dass die Kunststoffummantelung häufig herstellungsbedingte Risse aufweist, die unter den in einem Crashfall auftretenden hohen Belastungen weiter aufreißen und zur Folgen haben, dass die Kunststoffummantelung teilweise oder völlig abplatzt. Die dabei entstehenden Kunststoffkanten oder freigelegten Metallkanten können eine Beschädigung des Sicherheitsgurtes und im Extremfall auch ein Durchtrennen des Sicherheitsgurtes zur Folge haben. Bei einer aus DE 195 15 562 A1 bekannten Umlenkeinrichtung ist auf ein metallisches Umlenkelement eine Kunststoffabdeckung aufgebracht, die eine durchgehende Aussparung im Bereich der Außenkante des Metallteils aufweist. Die Aussparung bildet eine Sollbruchstelle, deren Aufbrechen im Crashfall die Funktion der Kunststoffabdeckung nicht beeinträchtigen soll, da die Bruchkante nicht im Bereich des Gurtverlaufes liegt. Bei Rissen im Kunststoffteil ist der Verlauf der Bruchkanten jedoch nur schwer zu beeinflussen. Ferner ist bei der dickwandigen Gestaltung der Kunststoffabdeckung die Wärmeableitung der im Crashfall auftretenden Reibungswärme unbefriedigend.

Bei einer aus DE 299 15 058 U1 bekannten Umlenkeinrichtung, von der die Erfindung ausgeht, ist das aus einem Stahlblechformteil bestehende Umlenkelement mit einer den Reibungswiderstand reduzierenden Gleitbeschichtung versehen. Als in Betracht kommende Beschichtungsmaterialien ist neben anderen Werkstoffen auch Polytetrafluorethylen (PTFE) genannt. Dieses Material weist zwar eine hohe Temperaturbeständigkeit auf, ist jedoch nur wenig abriebsfest. Für einen Dauerbetrieb ist das Material wenig geeignet.

Der Erfindung liegt die Aufgabe zugrunde, eine Umlenkeinrichtung anzugeben, die bei einfacher Herstellung und guten Standzeiten einen geringen Reibbeiwert zwischen Sicherheitsgurt und Gurtlauffläche sicherstellt.

Ausgehend von einer Umlenkeinrichtung des eingangs beschriebenen Aufbaus wird die Aufgabe erfindungsgemäß dadurch gelöst, dass die Gleitbeschichtung aus einer Fluorpolymermatrix und darin eingelagerten Verstärkungsstoffen besteht sowie eine Schichtdicke von weniger als 100 Mikrometer aufweist. Während die Fluorpolymermatrix der Gleitbeschichtung eine ausreichende Temperaturfestigkeit verleiht, sorgen die eingelagerten, vorzugsweise partikelförmigen Verstärkungsstoffe für eine erheblich höhere Abriebsfestigkeit und damit wesentlich höhere Standzeiten als bei reinen Fluorpolymerbeschichtungen. Die erfindungsgemäße Gleitbeschichtung, im Folgenden auch als verstärktes Fluorpolymersystem bezeichnet, weist gemäß einer bevorzugten Ausführung der Erfindung einen Reibbeiwert gegen Stahl von weniger als 0,1 auf. Vorzugsweise besitzt die Gleitbeschichtung eine Dicke von 15 bis 80 Mikrometer. Durch die geringe Schichtdicke ist eine gute Wärmeabfuhr an das darunter liegende, als Stahlblechformteil ausgebildete Umlenkelement gewährleistet, was sich wiederum günstig auf die bei einem Crashfall in der Beschichtung auftretende Erwärmung auswirkt. Ferner zeichnet sich die erfindungsgemäß mit einem verstärkten Fluorpolymersystem beschichtete Umlenkeinrichtung durch eine im Vergleich zu kunststoffummantelten Ausführungen wesentlich geringere Geräuschemission beim Gurtauszug aus.

Der metallische Gurtlaufabschnitt des Umlenkelementes weist gemäß einer bevorzugten Ausführung der Erfindung eine unregelmäßige Oberflächenstruktur auf, die ein vollflächiges Anliegen des Sicherheitsgurtes an der beschichteten Lauffläche verhindert. Die Oberflächenstruktur kann durch eine Oberflächenbehandlung des metallischen Gurtlaufabschnittes hergestellt werden, bevor die Gleitbeschichtung aufgebracht wird. Zweckmäßig ist die Gleitbeschichtung auf eine sandgestrahlte und anschließend kugelpolierte Oberfläche aufgebracht. Die Vorbehandlung der Metalloberfläche verbessert die Haftung der Gleitbeschichtung am Metall.

In weiterer Ausgestaltung lehrt die Erfindung, dass im Bereich des Gurtlaufabschnittes eine Walze vorgesehen ist,
wobei die Walze zwischen angeformten Laschen des Stahlblechformteils drehbar gelagert ist und wobei die Walze eine Ausnehmung des Gurtlaufabschnittes so durchfasst, dass sie die Kontur des Umlenkelementes im Bereich der Lauffläche des Sicherheitsgurtes fortsetzt. Bei dieser Ausführung wird aufgrund des weiter reduzierten Betätigungswiderstandes eine besonders bequeme Bedienung des Sicherheitsgurtes sichergestellt. Durch die Walzenrotation wird eine Gleitbewegung zwischen dem Sicherheitsgurt und der Kontaktfläche im Crashfall reduziert. Dadurch kann die Reibungswärme, die in einem Crashfall freigesetzt wird, weiter gesenkt und eine Erwärmung des Gurtes verhindert werden. Der die Ausnehmung durchfassende Abschnitt der Walze bildet in einem Schnitt quer zur Drehachse mehr als 20 %, vorzugsweise mindestens 40 % der Lauffläche für den Sicherheitsgurt.

Im Folgenden wird die Erfindung anhand einer lediglich ein Ausführungsbeispiel darstellenden Zeichnung näher erläutert. Es zeigen schematisch:

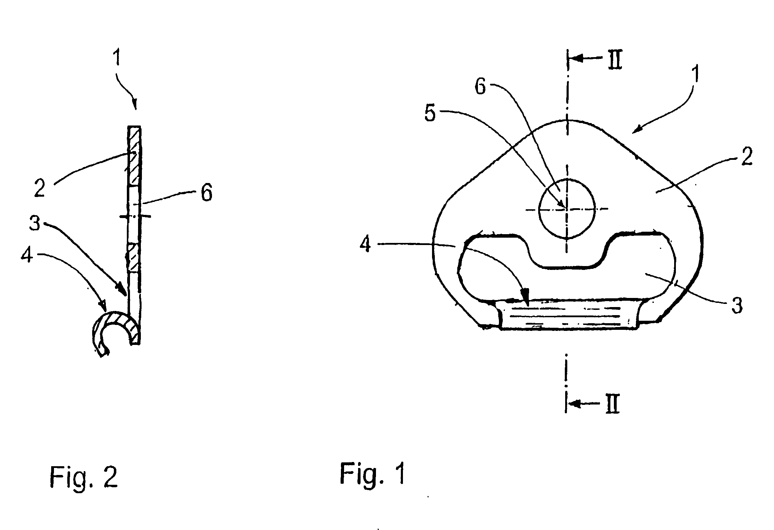

- **Fig. 1**: eine Draufsicht auf eine erfindungsgemäße Umlenkeinrichtung für einen Sicherheitsgurt,
- **Fig. 2**: einen Schnitt durch den Gegenstand der Fig. 1 in der Schnittebene II - II aus Fig. 1,
- **Fig. 3**: eine weitere Ausgestaltung der erfindungsgemäßen Umlenkeinrichtung in der Draufsicht,
- **Fig. 4**: einen Schnitt durch den Gegenstand der Fig. 3 in der Schnittebene III-III aus Fig. 3.

Die Figuren zeigt eine Umlenkeinrichtung 1 für einen Sicherheitsgurt mit einem Umlenkelement 2. Das Umlenkelement 2 besteht aus einem umgeformten Stahlblechteil und weist eine langgestreckte Gurtöse 3 auf, die zum Durchführen des Sicherheitsgurtes dient. Die Gurtöse 3 weist dabei einen Gurtlaufabschnitt 4 auf, der in Gurtlaufrichtung eine gekrümmte Lauffläche für den Sicherheitsgurt bildet.

Das Umlenkelement 2 enthält eine Bohrung 6, die im Flächenschwerpunkt 5 angeordnet ist. Mit einem durch die Bohrung 6 hindurchgeführten Befestigungselement kann die Umlenkeinrichtung an einer Trägereinheit einer Fahrzeugkarosserie, z. B. der B-Säule des Kraftfahrzeuges, schwenkbar befestigt werden.

Das Umlenkelement 2 ist mit einer Gleitbeschichtung aus einem verstärkten Fluorpolymersystem versehen, welche die Reibung zwischen dem Sicherheitsgurt und dem Gurtlaufabschnitt 4 stark reduziert. Das verstärkte Fluorpolymersystem besteht aus einer Fluorpolymermatrix, vorzugsweise aus Polytetrafluorethylen, und darin eingelagerten Verstärkungsstoffen. Die Beschichtung ist dünn und weist eine Schichtdicke von weniger als 100 Mikrometer auf. Sie ist sehr glatt und erreicht eine Oberflächenrauhigkeit Ra von weniger als 2 Mikrometern. Im Ausführungsbeispiel hat die Gleitbeschichtung eine Schichtdicke von 15 bis 80 Mikrometern, was sich vorteilhaft auf die Wärmeableitung zu dem unterseitigen Stahlblechformteil auswirkt.

Das Beschichtungsmaterial kann durch eine elektrostatische Pulverbeschichtung mit anschließender thermischer Behandlung, ein Nasslackierverfahren oder nach einem Wirbelstrominterverfahren auf das Stahlblechformteil aufgebracht werden. Dabei wird das Auftragsverfahren so geführt, dass eine möglichst dünne Gleitschicht resultiert, die aber zum Zwecke des Korrosionsschutzes des Stahlblechformteils eine dichte Oberfläche bildet.

Der dynamische Reibbeiwert der erfindungsgemäßen Gleitbeschichtung entspricht dabei nahezu dem statischen Reibbeiwert, so dass es zu keiner Ausbildung eines Slipstick-Effekts kommt. Der Beschichtungswerkstoff weist eine Temperaturbeständigkeit von -45 bis 260° C auf und eignet sich hervorragend für die erfindungsgemäße Anwendung. Ferner versteht es sich, dass das Umlenkelement nicht vollständig mit der Gleitbeschichtung versehen sein muss sondern eine Beschichtung im Bereich der Gurtlauffläche ausreichend ist.

Zur Erhöhung der Haftung der Gleitbeschichtung auf dem Stahlblechformteil kann das Stahlblechformteil vor der Beschichtung einer Vorbehandlung unterworfen werden. Dabei wird die Oberfläche des Stahlblechformteils zunächst sandgestrahlt und anschließend kugelpoliert. Die Oberfläche weist dabei weiterhin eine unregelmäßige Oberflächenstruktur auf, die ein vollflächiges Anliegen des Sicherheitsgurtes verhindert, wodurch sich die im Betrieb auftretende Gesamtreibkraft noch weiter reduziert.

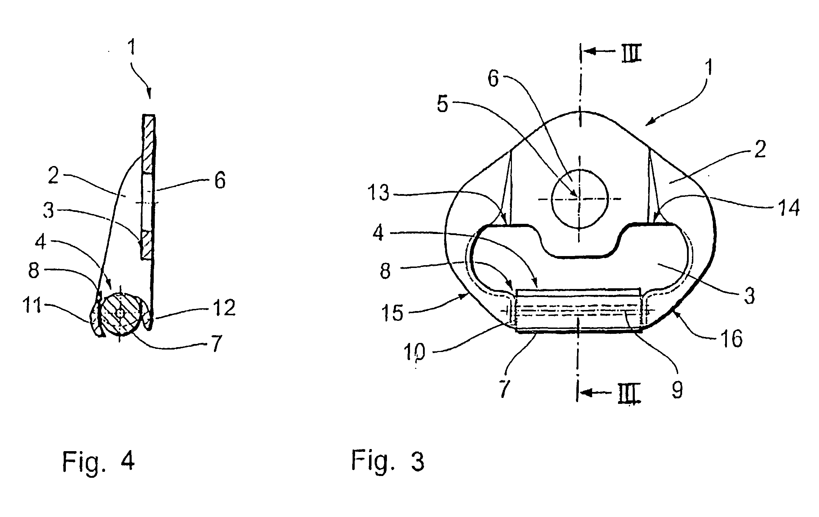

Bei der in den Fig. 3 und 4 dargestellten Ausführung der erfindungsgemäßen Umlenkeinrichtung ist im Bereich des Gurtlaufabschnittes 4 eine Walze 7 vorgesehen, die drehbar auf einer Achse 9 gelagert ist. Die Achse 9 ist wiederum in Laschen 10 gelagert, die durch Umformung des das Umlenkelement 2 bildenden Blechteils erzeugt worden sind. Zur Ausbildung des gekrümmten Gurtlaufabschnittes 4 wird während der Herstellung des Umlenkelementes 2 zunächst eine Zunge aus dem Blechteil ausgestanzt, die anschließend bogenförmig zum Gurtlaufabschnitt 4 umgeformt wird. Den Figuren entnimmt man ferner, dass die Walze 7 eine Ausnehmung 8 des Gurtlaufabschnittes 4 so durchfasst, dass sie die Kontur des Umlenkelementes 2 im Bereich der Lauffläche des Sicherheitsgurtes fortsetzt. Hierdurch ist sichergestellt, dass der Sicherheitsgurt bei seiner Betätigung einer im Wesentlichen gleichförmigen Verformung unterworfen ist, was sich vorteilhaft auf seine Standzeit auswirkt. Das Umlenkelement 2 bildet einen Rahmen um die Walze 7. Der Rahmen setzt sich aus seitlich zur Walze verlaufenden Rahmenabschnitten 11, 12 zusammen, die sich parallel zur Drehachse der Walze 7 erstrecken und dem Umlenkelement eine ausreichende Festigkeit in diesem Bereich geben, ohne die Abmessungen des Umlenkelementes 2 zu vergrößern. Die Walze 7 ist derart ausgebildet und angeordnet, dass sie in einem Schnitt quer zu ihrer Drehachse 9 etwa 40 % der Lauffläche für den Sicherheitsgurt bildet. Die Lauffläche setzt sich durch die Rahmenabschnitte 11 und 12 und dem Walzenabschnitt, der die Ausnehmung 8 zwischen den Rahmenabschnitten 11, 12 durchfasst, zusammen. Zumindest die Rahmenabschnitte 11, 12 sind mit der zuvor beschriebenen Gleitbeschichtung aus einem verstärken Fluorpolymersystem versehen.

Die in den Figuren dargestellte Umlenkeinrichtung ist zur Integration in die B-Säule, C-Säule oder D-Säule eines Personenkraftfahrzeuges ausgebildet. Sie kann von außen unsichtbar, beispielsweise unter der Verkleidung angeordnet werden. Hierzu ist sie durch die besondere Lage des Schwerpunktes 5 und durch die Gestaltung ihrer Außenkontur an den im Bereich einer solchen schmalen Trägereinheit eines Fahrzeuges, wie die B-Säule darstellt, zur Verfügung stehenden geringen Bauraum angepasst. Der Schwerpunkt 5 ist in Richtung der Gurtlauffläche 4 so weit verlagert, dass sich ein entsprechend kleiner durch die Außenkontur des Umlenkelements 2 definierter Schwenkradius des gesamten Umlenkelementes 2 ergibt, der eine Integration in die Trägereinheit ermöglicht.

Der Versatz des Schwerpunktes 5 ist so gering gewählt, dass ein sogenanntes Überschlagen des Umlenkelements 2 im CrashFall, d. h. ein übermäßiger Schwenkwinkel der Umlenkeinrichtung 1, während des Crashs verhindert ist. Zweckmäßig ist der Gurtlaufbereich konstruktiv so ausgebildet, dass unter Belastung eine geringfügig elastische Verformung auftritt, durch die sich das Gurtband im Crashfall auf der Gurtlauffläche zentriert. Die Position der Bohrung 6 ist im Ausführungsbeispiel so gewählt, dass die Bohrung 6 in die Verbindungslinie der beiden Konturen 13 und 14 der Gurtöse 3 hineinragt.

Die Außenkontur des Umlenkelements ist in den Umfangsbereichen 15, 16 derart abgeflacht, dass sie beim Verschwenken des Umlenkelementes 2 bezüglich des Schwerpunktes 5 einen Radius definiert, der kleiner ist als die Querabmessung, die für die Integration in beispielsweise die B-Säule zur Verfügung steht. Die Abflachung geht dabei so weit, wie für den im Einsatz zu erzielenden maximalen Schwenkwinkel erforderlich ist.

## Patentansprüche

1. Umlenkeinrichtung für einen Sicherheitsgurt mit einem an einer Trägereinheit einer Fahrzeugkarosserie befestigbaren Umlenkelement (2), das eine langgestreckte Gurtöse (3) mit einem eine Lauffläche für den Sicherheitsgurt bildenden Gurtlaufabschnitt (4) aufweist,
wobei das Umlenkelement (2) aus einem Stahlblechformteil besteht, an das der Gurtlaufabschnitt (4) angeformt ist, und
wobei der Gurtlaufabschnitt (4) mit einer den Reibungswiderstand reduzierenden Gleitbeschichtung aus Fluorpolymer versehen ist,
**dadurch gekennzeichnet, dass** die Gleitbeschichtung aus einer Fluorpolymermatrix und darin eingelagerten Verstärkungsstoffen besteht sowie eine Schichtdicke von weniger als 100 Mikrometer aufweist.

2. Umlenkeinrichtung nach Anspruch 1, **dadurch gekennzeichnet, dass** der metallische Gurtlaufabschnitt (4) des Umlenkelementes (2) eine unregelmäßige Oberflächenstruktur aufweist, die ein vollflächiges Anliegen des Sicherheitsgurtes an der anschließend mit der Gleitbeschichtung versehenen Lauffläche verhindert.

3. Umlenkeinrichtung nach Anspruch 1 oder 2, **dadurch gekennzeichnet, dass** die Gleitbeschichtung auf eine sandgestrahlte und anschließend kugelpolierte Oberfläche aufgebracht ist.

4. Umlenkeinrichtung nach einem der Ansprüche 1 bis 3, **dadurch gekennzeichnet, dass** die Gleitbeschichtung eine Dicke von 15 bis 80 Mikrometer aufweist.

5. Umlenkeinrichtung nach einem der Ansprüche 1 bis 4, **dadurch gekennzeichnet, dass** im Bereich des Gurtlaufabschnittes (4) eine Walze (7) vorgesehen ist, wobei die Walze (7) zwischen angeformten Laschen (10) des Stahlblechformteils drehbar gelagert ist und wobei die Walze (7) eine Ausnehmung (8) des Gurtlaufabschnittes (4) so durchfasst, dass sie die Kontur des Umlenkelementes (2) im Bereich der Lauffläche des Sicherheitsgurtes fortsetzt.

6. Umlenkeinrichtung nach Anspruch 5, **dadurch gekennzeichnet, dass** der die Ausnehmung (8) durchfassende Abschnitt der Walze (7) in einem Schnitt quer zur Drehachse mehr als 20 %, vorzugsweise mindestens 40 %, der Lauffläche für den Sicherheitsgurt bildet.

## Claims

1. A turning device for a seat belt with a turning element (2) that can be secured to a load-bearing unit of a vehicle body, which has an elongated belt eye (3) with a belt runner section (4) forming a running surface for the seat belt, wherein
the turning element (2) consists of a steel plate formed part, on which the belt runner section (4) is formed, and
wherein the belt runner section (4) is fitted with an anti-friction coating of a fluoropolymer that reduces the friction resistance,
**characterised in that** the anti-friction coating consists of a fluoropolymer matrix and reinforcement materials that are deposited within it and has a coating thickness of less than 100 microns.

2. The turning device according to Claim 1,
**characterised in that** the metallic belt runner section (4) of the turning element (2) has an irregular surface structure that prevents full surface contact between the seat belt and the running surface that is subsequently provided with the anti-friction coating.

3. The turning device according to Claim 1 or 2,
**characterised in that** the anti-friction coating is applied to a surface that is sandblasted and subsequently ball polished.

4. The turning device according to one of the Claims 1 to 3,
**characterised in that** the anti-friction coating has a thickness of 15 to 80 microns.

5. The turning device according to one of the Claims 1 to 4,
**characterised in that** in the region of the belt runner section (4) a roller (7) is fitted, wherein the roller (7) is supported such that it can rotate between lugs (10) formed on the steel plate formed part, and wherein the roller (7) fits into a cut-out (8) of the belt runner section (4) such that it continues the contour of the turning element (2) in the region of the running surface of the seat belt.

6. The turning device according to Claim 5,
**characterised in that** the section of the roller (7) that fits into the cut-out (8) forms more than 20 %, preferably at least 40 %, of the running surface for the seat belt in a plane at right angles to the axis of rotation.

## Revendications

1. Dispositif de renvoi pour une ceinture de sécurité comportant un élément de renvoi (2) pouvant être fixé sur une unité porteuse d'une carrosserie de véhicule, lequel élément comporte un oeillet pour ceinture (3) allongé comportant une section de glissement pour ceinture (4) formant une surface de glissement pour la ceinture de sécurité,
dans lequel l'élément de renvoi (2) est constitué d'une pièce formée en tôle d'acier sur laquelle est formée la section de glissement pour ceinture (4)
dans lequel la section de glissement pour ceinture (4) est munie d'un revêtement de glissement en fluoropolymère réduisant la résistance de frottement,
**caractérisé en ce que** le revêtement de glissement est constitué d'une matrice en fluoropolymère et de matériaux de renfort noyés dedans et présente une épaisseur de couche de moins de 100 micromètres.

2. Dispositif de renvoi selon la revendication 1, **caractérisé en ce que** la section métallique de glissement pour ceinture (4) de l'élément de renvoi (2) présente une structure de surface irrégulière qui empêche la ceinture de sécurité de reposer par sa surface totale sur la surface de glissement ensuite pourvue du revêtement de glissement.

3. Dispositif de renvoi selon la revendication 1 ou 2, **caractérisé en ce que** le revêtement de glissement est appliqué sur une surface sablée et ensuite polie à la bille.

4. Dispositif de renvoi selon l'une des revendications 1 à 3, **caractérisé en ce que** le revêtement de glissement présente une épaisseur de 15 à 80 micromètres.

5. Dispositif de renvoi selon l'une des revendications 1 à 4, **caractérisé en ce que** dans le secteur de la section de glissement pour ceinture (4) est prévu un rouleau (7), le rouleau (7) étant supporté en rotation entre des pattes formées (10) de la pièce formée en tôle d'acier et le rouleau (7) s'imbriquant dans un évidement (8) de la section de glissement pour ceinture (4) de telle façon qu'il prolonge le contour de l'élément de renvoi (2) dans la zone de la surface de glissement de la ceinture de sécurité.

6. Dispositif de renvoi selon la revendication 5, **caractérisé en ce que**, dans une coupe transversale par rapport à l'axe de rotation, la section du rouleau (7) s'imbriquant dans l'évidement (8) constitue plus de 20 %, de préférence au moins 40 % de la surface de glissement de la ceinture de sécurité.
